# EUROPEAN PATENT APPLICATION

(11) **EP 4 826 826 A1**
(43) Date of publication of application: **21.10.2026**
(21) Application number: 25870419.6
(22) Date of filing: 09.07.2025
(51) Int. Cl.: H01M 10/0567, H01M 10/0569

(54) **SECONDARY BATTERY AND ELECTRICAL DEVICE**

(30) Priority: 27.09.2024 CN 202411364702
(71) Applicant: Contemporary Amperex Technology Co., Limited, Ningde, Fujian 352100 (CN)
(72) Inventor: FAN, Peng, Ningde, Fujian 352100 (CN); LI, Yuanyuan, Ningde, Fujian 352100 (CN); HAN, Changlong, Ningde, Fujian 352100 (CN); SHEN, Rui, Ningde, Fujian 352100 (CN); HE, Libing, Ningde, Fujian 352100 (CN); LIU, Na, Ningde, Fujian 352100 (CN)
(74) Representative: Lorenz Seidler Gossel Part. mbB
(86) International application number: PCT/CN2025/107715
(87) International publication number: WO 2026/066504

(57) **Abstract**

The present disclosure provides a secondary battery and an electric apparatus. The secondary battery includes a positive electrode sheet, a negative electrode sheet, a separator, and an electrolyte. A conductivity of the electrolyte is 14 mS/cm to 22 mS/cm, and the electrolyte includes a first additive. The first additive includes at least one of compounds represented by Formula I and Formula II, in Formula I, R₁ is selected from H, a fluorine atom, a fluorine-substituted or unsubstituted C1-C12 alkyl group, and a fluorine-substituted or unsubstituted C2-C10 alkenyl group; and in Formula II, R₂, R₃, R₄, and R₅ are each independently selected from a hydrogen atom, a fluorine atom, a fluorine-substituted or unsubstituted C1-C6 alkyl group, a fluorine-substituted or unsubstituted C1-C6 alkoxy group, a C2-C6 alkenyl group, or a C2-C6 alkynyl group, and R₂, R₃, R₄, and R₅ are not all hydrogen atoms.

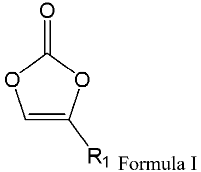

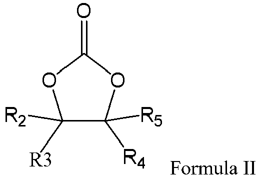

## Description

### CROSS-REFERENCE TO RELATED APPLICATIONS

The present disclosure is based on Application No. 202411364702.8, filed on September 27, 2024 and entitled "SECONDARY BATTERY AND ELECTRIC APPARATUS", and claims priority to the Chinese Patent application, which is incorporated herein by reference in its entirety.

### TECHNICAL FIELD

The present disclosure relates to the field of secondary battery technologies, and in particular, to a secondary battery and an electric apparatus.

### BACKGROUND

In recent years, with increasingly wide use of secondary batteries, secondary batteries have been widely used in energy storage power supply systems such as hydroelectric, thermal, wind, and solar power plants, as well as many other fields including electric tools, electric bicycles, electric motorcycles, electric vehicles, aerospace, and the like. Along with the great development of secondary batteries, higher requirements are imposed on their energy density, cycling performance, and the like.

### SUMMARY

The present disclosure is made in view of the above problems. An object of the present disclosure is to provide a secondary battery and an electric apparatus. The secondary battery can improve cycling performance while achieving high energy density.

A first aspect of the present disclosure provides a secondary battery, including a positive electrode sheet, a negative electrode sheet, a separator, and an electrolyte. A conductivity of the electrolyte is 14 mS/cm to 22 mS/cm, and the electrolyte includes a first additive. The first additive includes at least one of compounds represented by Formula I and Formula II: 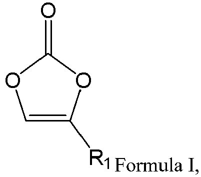 where
in Formula I, R₁ is selected from H, a fluorine atom, a fluorine-substituted or unsubstituted C1-C12 alkyl group, and a fluorine-substituted or unsubstituted C2-C10 alkenyl group; and 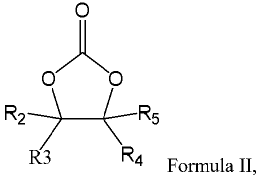 where
in Formula II, R₂, R₃, R₄, and R₅ are each independently selected from a hydrogen atom, a fluorine atom, a fluorine-substituted or unsubstituted C1-C6 alkyl group, a fluorine-substituted or unsubstituted C1-C6 alkoxy group, a C2-C6 alkenyl group, or a C2-C6 alkynyl group, and R₂, R₃, R₄, and R₅ are not all hydrogen atoms. Thus, the secondary battery of the present disclosure can achieve both high energy density and good cycling performance.

In some embodiments, the conductivity of the electrolyte is 14 mS/cm to 19 mS/cm. Thus, a transport rate of active ions can be improved, and it is conducive to reducing concentration polarization in the secondary battery and inhibiting lithium precipitation at a negative electrode interface, thereby improving the cycling performance of the secondary battery.

In some embodiments, in Formula I, R₁ is selected from a hydrogen atom, a fluorine atom, a fluorine-substituted or unsubstituted C1-C6 alkyl group, and a fluorine-substituted or unsubstituted C2-C6 alkenyl group; and/or in Formula II, R₂, R₃, R₄, and R₅ are each independently selected from a hydrogen atom, a fluorine atom, a fluorine-substituted or unsubstituted C1-C4 alkyl group, a fluorine-substituted or unsubstituted C1-C4 alkoxy group, C2-C4 alkenyl group, or a C2-C4 alkynyl group, and R₂, R₃, R₄, and R₅ are not all hydrogen atoms. Thus, it is conducive to improving the cycling performance of the secondary battery.

In some embodiments, the first additive includes at least one of fluoroethylene carbonate and vinylene carbonate. Thus, it is more conducive to improving the cycling performance of the secondary battery.

In some embodiments, the electrolyte includes a first solvent, and the first solvent includes a compound represented by Formula III: 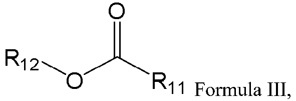 where
in Formula III, R₁₁ is selected from a hydrogen atom and a fluorine-substituted or unsubstituted C1-C4 alkyl group, and R₁₂ is selected from a fluorine-substituted or unsubstituted C1-C4 alkyl group. By using the carboxylic acid ester solvent represented by Formula III, the conductivity of the electrolyte can be significantly improved, and the viscosity of the electrolyte can be reduced, which is conducive to improving the cycling performance of the secondary battery.

In some embodiments, the first solvent is selected from one or more of methyl formate, ethyl formate, methyl acetate, ethyl acetate, propyl acetate, methyl propionate, ethyl propionate, and propyl propionate. In some embodiments, the first solvent is selected from one or more of ethyl formate, methyl acetate, and ethyl acetate. Thus, it is more conducive to improving the cycling performance of the secondary battery.

In some embodiments, the electrolyte further includes a second additive, and the second additive includes at least one of compounds represented by Formula IV and Formula V: 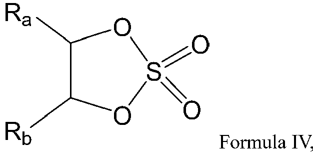 where
in Formula IV, Rₐ and R_{b} each independently represent H, 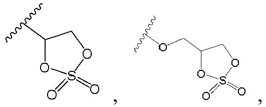 and 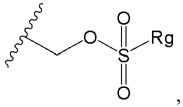 or Rₐ and R_{b} are connected to form 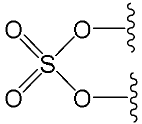 structure, and R_{g} represents a fluorine atom, a fluorine-substituted or unsubstituted C1-C6 alkyl group, a C1-C6 alkoxy group, or 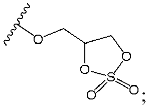 and 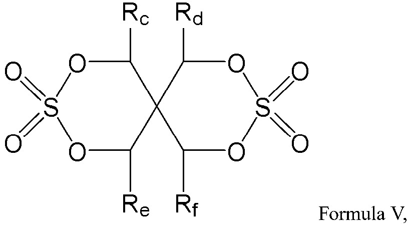
where
in Formula V, R_{c}, R_{d}, Rₑ, and R_{f} each independently represent H or a fluorine atom.

In some embodiments, the second additive includes one or more of ethylene sulfate, bis(ethylene sulfate),

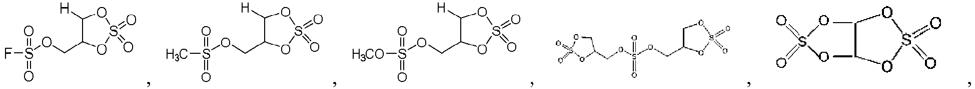

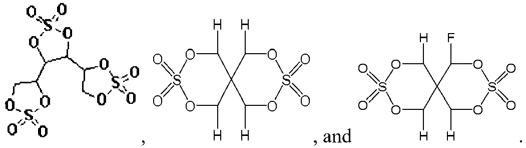

In the present disclosure, by adding the above second additive to the electrolyte, a dense SEI film can be formed at the negative electrode interface, providing a good passivation effect and improving the stability of the negative electrode interface, thereby inhibiting the reduction of the carboxylic acid ester solvent on a negative electrode, and further improving the cycling performance of the secondary battery.

In some embodiments, in the electrolyte, a mass content of the first additive is 0.01% to 5%. Thus, it is conducive to alleviating the volume swelling and contraction of high gram capacity graphite during the charging and discharging process, and reducing the damage of the SEI caused by such swelling and contraction, thereby facilitating improving the cycling performance.

In some embodiments, in the electrolyte, a mass content of the first solvent is 20% to 80%. Thus, it is more conducive to improving the cycling performance of the secondary battery.

In some embodiments, in the electrolyte, a mass ratio of the first solvent to the second additive is 2200:1 to 10:1. Thus, it is conducive to improving the conductivity of the electrolyte, while the second additive can form a dense protective film at the negative electrode interface, inhibiting the side reaction of the first solvent passing through the interface, and maintaining good stability of the negative electrode interface.

In some embodiments, in the electrolyte, a mass content of the second additive is 0.01% to 2%. The second additive can form a dense SEI film on a surface of the negative electrode during formation, which can inhibit the side reaction of the first solvent passing through the interface film on the negative electrode, thereby improving the cycling performance of the battery.

In some embodiments, the electrolyte further includes a second solvent, and the second solvent includes at least one selected from ethylene carbonate, propylene carbonate, butylene carbonate, dimethyl carbonate, methyl ethyl carbonate, and diethyl carbonate. The cyclic esters such as ethylene carbonate, propylene carbonate, and butylene carbonate have high dielectric constants and can dissociate lithium ions in the electrolyte, thereby facilitating more mobile lithium ions in the secondary battery, thus achieving high ionic conductivity; and the linear esters such as dimethyl carbonate, methyl ethyl carbonate, and diethyl carbonate can, on one hand, adjust the viscosity of the electrolyte, and on the other hand, adjust the low-temperature freezing point of the electrolyte, providing the electrolyte with balanced performance.

In some embodiments, in the electrolyte, a mass ratio of the first solvent to the second solvent is 1:3 to 9:1. Thus, this facilitates the electrolyte having high conductivity and appropriate viscosity and low-temperature freezing point.

In some embodiments, the negative electrode sheet includes a negative electrode current collector and a negative electrode film layer located on at least one surface of the negative electrode current collector, a surface density of the negative electrode film layer is greater than or equal to 10.5 mg/cm²; and/or the negative electrode film layer includes a graphite material, and a gram capacity of the graphite material is greater than or equal to 355 mAh/g. Thus, it is conducive to improving the energy density of the secondary battery.

In some embodiments, the surface density of the negative electrode film layer is 12.0 mg/cm² to 18.5 mg/cm², and/or, the gram capacity of the graphite material is 362 mAh/g to 370 mAh/g. Thus, it is conducive to improving the energy density of the secondary battery.

In some embodiments, a thickness of the negative electrode film layer on one side of the negative electrode current collector is 70 µm to 125 µm. Thus, this facilitates the negative electrode sheet having high capacity, so that the battery has high energy density.

In some embodiments, a compaction density of the negative electrode sheet is 1.45 g/cm³ to 1.78 g/cm³. Thus, it is conducive to improving the energy density of the secondary battery.

In some embodiments, a powder compaction density of the graphite material under 50000 N pressure is greater than or equal to 1.83 g/cc. Thus, it is conducive to improving the energy density of the secondary battery.

In some embodiments, the powder compaction density of the graphite material under 50000 N pressure is 1.93 g/cc to 2.05 g/cc. Thus, it is conducive to improving the energy density of the secondary battery.

In some embodiments, a specific surface area of the graphite material is 0.6 m²/g to 1.4 m²/g. Thus, it is conducive to improving the cycling performance of the secondary battery.

In some embodiments, a volume-based particle size Dᵥ50 of the graphite material is 12 µm to 22 µm. Thus, this facilitates the negative electrode film layer having high compaction density, thereby facilitating the secondary battery having high energy density.

In some embodiments, the positive electrode sheet includes a positive electrode current collector and a positive electrode film layer located on at least one surface of the positive electrode current collector, and the positive electrode film layer includes a lithium-containing phosphate.

In some embodiments, a chemical formula of the lithium-containing phosphate includes: LiₘAₐFeₓD_{d}P_{y}EₑO_{z}G_{g}, where A includes at least one element of Al, Na, K, or Mg; D includes at least one element of Cu, Mn, Cr, Zn, Pb, Ca, Co, Ni, Sr, Nb, Ti, or V; E includes at least one element of B, S, Si, or N; G includes at least one element of S, F, Cl, or Br; 0.5≤m≤1.15; 0≤a≤0.1; 0.5≤x≤1; 0≤d≤0.5; 0.5≤y≤1; 0≤e≤0.5; 3.5≤z≤4; and 0≤g≤0.5.

A second aspect of the present disclosure provides an electric apparatus, including the secondary battery of the first aspect of the present disclosure. Thus, the electric apparatus of the present disclosure has at least the advantages of the secondary battery of the present disclosure.

### BRIEF DESCRIPTION OF DRAWINGS

FIG. 1 is a schematic diagram of a secondary battery according to an embodiment of the present disclosure.
FIG. 2 is an exploded view of a secondary battery according to an embodiment of the present disclosure shown in FIG. 1.
FIG. 3 is a schematic diagram of a battery module according to an embodiment of the present disclosure.
FIG. 4 is a schematic diagram of a battery pack according to an embodiment of the present disclosure.
FIG. 5 is an exploded view of a battery pack according to an embodiment of the present disclosure shown in FIG. 4.
FIG. 6 is a schematic diagram of an electric apparatus using a secondary battery as a power source according to an embodiment of the present disclosure.

### Reference signs:

1 battery pack; 2 upper box body; 3 lower box body; 4 battery module; 5 secondary battery; 51 housing; 52 electrode assembly; and 53 top cover assembly.

### DESCRIPTION OF EMBODIMENTS

The following specifically discloses in detail embodiments of the secondary battery and electric apparatus of the present disclosure, with appropriate reference to the accompanying drawings. However, there may be cases in which unnecessary detailed descriptions are omitted. For example, detailed description of a well-known matter or repeated description of an actually identical structure has been omitted. This is to avoid unnecessarily prolonging the following descriptions, for ease of understanding by persons skilled in the art. In addition, the accompanying drawings and the following descriptions are provided for persons skilled in the art to fully understand the present disclosure and are not intended to limit the subject described in the claims.

"Ranges" disclosed in the present disclosure are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it should be understood that ranges of 60-110 and 80-120 can also be envisioned. In addition, if minimum limit values of a range are given as 1 and 2, and maximum limit values of the range are given as 3, 4, and 5, the following ranges can all be envisioned: 1-3, 1-4, 1-5, 2-3, 2-4, and 2-5. In the present disclosure, unless otherwise specified, a value range of "a-b" is a short representation of any combination of real numbers between a and b, where both a and b are real numbers. For example, a value range of "0-5" means that all real numbers from "0-5" are listed herein, and "0-5" is just an abbreviated representation of a combination of these values. In addition, a parameter expressed as an integer greater than or equal to 2 is equivalent to disclosure that the parameter is, such as, an integer among 2, 3, 4, 5, 6, 7, 8, 9, 10, 11, 12, and so on.

Unless otherwise stated, all the embodiments and optional embodiments of the present disclosure can be combined with each other to form new technical solutions.

Unless otherwise stated, all the technical features and optional technical features of the present disclosure can be combined with each other to form new technical solutions.

With the rapid development of electric vehicles, the requirements for the driving range of electric vehicles are increasing, thus batteries with higher energy density are needed. However, with the further increase of the energy density of secondary batteries, the secondary batteries often undergo large volume changes during the charge-discharge cycle process, causing electrode structure damage, particle pulverization, increased internal resistance, and the like. During the cycle process, an unstable SEI film or CEI film is formed on a surface of an electrode, and the continuous growth and cracking of these interface films consume the electrolyte and electrode materials, leading to further increase in battery internal resistance, all these factors affect the cycling performance of the secondary battery. Currently, secondary batteries generally achieve high energy density by using a graphite material with high gram capacity and/or increasing the surface density of a negative electrode film layer. However, a negative electrode active material with high gram capacity is prone to swelling during the cycle process, damaging the SEI film, consuming active ions and thus leading to rapid capacity decay of the secondary battery and deterioration of cycling performance. In addition, when using a negative electrode sheet with high surface density, the thickness of the negative electrode sheet increases, lengthening the transport path of lithium ions in the electrode sheet, leading to deterioration of the electrode sheet kinetics, thereby adversely affecting the cycling performance of the battery. Therefore, how to improve the cycling performance of the battery while having high energy density has gradually become a research hotspot in the field of batteries.

In view of this, the present disclosure provides a secondary battery, including a positive electrode sheet, a negative electrode sheet, a separator, and an electrolyte. A conductivity of the electrolyte is 14 mS/cm to 22 mS/cm, and the electrolyte includes a first additive. The first additive includes at least one of compounds represented by Formula I and Formula II: 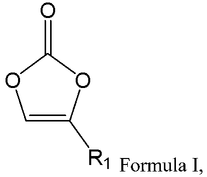 where
in the formula, R₁ is selected from H, a fluorine atom, a fluorine-substituted or unsubstituted C1-C12 alkyl group, and a fluorine-substituted or unsubstituted C2-C10 alkenyl group; and 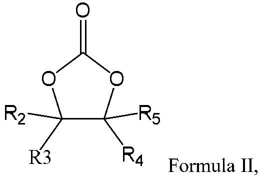 where
in the formula, R₂, R₃, R₄, and R₅ are each independently selected from a hydrogen atom, a fluorine atom, a fluorine-substituted or unsubstituted C1-C6 alkyl group, a fluorine-substituted or unsubstituted C1-C6 alkoxy group, a C2-C6 alkenyl group, or a C2-C6 alkynyl group, and R₂, R₃, R₄, and R₅ are not all hydrogen atoms.

With the increase of the surface density of the negative electrode sheet, the mass of the negative electrode film layer per unit area increases, leading to an increase in the thickness of the negative electrode sheet, lengthening the transport path of lithium ions in the electrode sheet, leading to deterioration of the electrode sheet kinetics, thereby adversely affecting the cycling performance of the battery. In the present disclosure, by setting the electrolyte to have a conductivity of 14 mS/cm to 22 mS/cm, the transport rate of active ions can be improved by improving the conductivity of the electrolyte, reducing the impact of increased surface density of the negative electrode sheet on active ion transport. This is conducive to reducing concentration polarization in the secondary battery and inhibiting lithium precipitation at a negative electrode interface, thereby improving the cycling performance of the secondary battery. For example, the conductivity of the electrolyte may be 14 mS/cm, 16 mS/cm, 18 mS/cm, 20 mS/cm, or 22 mS/cm, or a value falling within a range defined by any two of these values. In some optional embodiments, the conductivity of the electrolyte is 14 mS/cm to 19 mS/cm.

On the other hand, with the use of the graphite material with high gram capacity, the graphite material with high gram capacity is more prone to swelling, making the secondary battery more prone to swelling during the cycle process, leading to damage of the SEI film, consuming active ions and thus leading to rapid capacity decay of the secondary battery and deterioration of cycling performance. In the present disclosure, by adding the above first additive to the electrolyte, a networked crosslinked (with certain flexibility) interface film (SEI film) can be formed at the negative electrode interface, and such interface film can inhibit the swelling of the graphite material and reduce the resulting cycle decay, thereby improving the cycling performance of the secondary battery.

Although the mechanism is not clear, the inventors have studied and found that for secondary batteries with high energy density, using an electrolyte with conductivity in the range of 14 mS/cm to 22 mS/cm, while introducing the first additive of the present disclosure, the transport rate of active ions in the electrolyte can be improved, and at the same time the swelling of the negative electrode active material is inhibited, significantly improving the cycle stability of the secondary battery through the synergistic effect of the high conductivity electrolyte and the first additive. Thus, the secondary battery can achieve both high energy density and good cycling performance.

In the present disclosure, the term "C1-C12 alkyl group" refers to a group formed by removing one hydrogen atom from a linear or branched alkane molecule having 1 to 12 carbon atoms, for example, including but not limited to methyl, ethyl, propyl, n-butyl, isobutyl, sec-butyl and tert-butyl, n-pentyl, isopentyl, neopentyl, hexyl, heptyl, octyl, nonyl, decyl, undecyl, dodecyl, and the like. The term "C1-C6 alkyl group" refers to a group formed by removing one hydrogen atom from a linear or branched alkane molecule having 1 to 6 carbon atoms, for example, including but not limited to methyl, ethyl, propyl, n-butyl, isobutyl, sec-butyl, tert-butyl, n-pentyl, isopentyl, neopentyl, hexyl, and the like.

In the present disclosure, the term "fluorinated C1-C12 alkyl group" refers to a group formed by partially or fully substituting hydrogen atoms in the above C1-C12 alkyl group with the above fluorine atoms, for example, including but not limited to fluoromethyl, fluoroethyl, fluoropropyl, fluorobutyl, fluoropentyl, fluorohexyl, fluoroheptyl, fluorononyl, fluorodecyl, fluoroundecyl, fluorododecyl, and the like.

In the present disclosure, the term "C2-C10 alkenyl group" refers to a group formed by removing one hydrogen atom from a linear or branched alkene having 2 to 10 carbon atoms and having at least one carbon-carbon double bond, for example, including but not limited to vinyl, propenyl, butenyl, pentenyl, 1,3-pentadienyl, hexenyl, heptenyl, octenyl, nonenyl, decenyl, and the like. The term "C2-C6 alkenyl group" refers to a group formed by removing one hydrogen atom from a linear or branched alkene having 2 to 6 carbon atoms and having at least one carbon-carbon double bond, for example, including vinyl, propenyl, butenyl, pentenyl, 1,3-pentadienyl, and hexenyl.

In the present disclosure, the term "fluorinated C2-C10 alkenyl group" refers to a group formed by partially or fully substituting hydrogen atoms of the above C2-C10 alkenyl group with fluorine atoms, for example, including but not limited to fluorovinyl, fluoropropenyl, fluorobutenyl, fluoropentenyl, fluoropentadienyl, fluorohexenyl, fluoroheptenyl, fluorooctenyl, fluorononenyl, fluorodecenyl, and the like.

In the present disclosure, the term "C1-C6 alkoxy group" refers to a group formed by an alkyl group having 1 to 6 carbon atoms and one oxygen atom, for example, including but not limited to methoxy, ethoxy, propoxy, pentyloxy, hexyloxy, heptyloxy, and the like.

In the present disclosure, the term "C2-C6 alkynyl group" refers to a group formed by removing one hydrogen atom from an alkyne having 2 to 6 carbon atoms and having at least one carbon-carbon triple bond, for example, including but not limited to ethynyl, propynyl, butynyl, pentynyl, hexynyl, and the like.

In some embodiments, in Formula I, R₁ is selected from a hydrogen atom, a fluorine atom, a fluorine-substituted or unsubstituted C1-C6 alkyl group, and a fluorine-substituted or unsubstituted C2-C6 alkenyl group; and/or, in Formula II, R₂, R₃, R₄, and R₅ are each independently selected from a hydrogen atom, a fluorine atom, a fluorine-substituted or unsubstituted C1-C4 alkyl group, a fluorine-substituted or unsubstituted C1-C4 alkoxy group, C2-C4 alkenyl group or C2-C4 alkynyl group, and R₂, R₃, R₄, and R₅ are not all hydrogen atoms.

In some embodiments, the first additive includes at least one of fluoroethylene carbonate and vinylene carbonate.

In some embodiments, in the electrolyte, a mass content of the first additive is 0.01% to 5%. By making the mass content of the first additive within the above range, it is conducive to forming an SEI rich in organic components on the surface of the negative electrode, which can alleviate the volume swelling and contraction of high gram capacity graphite during the charging and discharging process, and reduce the damage of the SEI caused by such swelling and contraction. For example, the mass content of the first additive is 0.01%, 0.05%, 0.1%, 0.5%, 1.0%, 1.5%, 2.0%, 2.5%, 3.0%, 4.0%, 5.0%, or a value falling within a range defined by any two of these values. In some optional embodiments, in the electrolyte, the mass content of the first additive is 0.5% to 5%.

In some embodiments, the electrolyte includes a first solvent, and the first solvent includes a compound represented by Formula III: 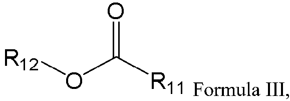 where
in Formula III, R₁₁ is selected from a hydrogen atom and a fluorine-substituted or unsubstituted C1-C4 alkyl group, and R₁₂ is selected from a fluorine-substituted or unsubstituted C1-C4 alkyl group. In the present disclosure, by using the carboxylic acid ester solvent represented by Formula III, the conductivity of the electrolyte can be significantly improved, and the viscosity of the electrolyte can be reduced. Thus, it is conducive to improving the diffusion ability of active ions, reducing concentration polarization in the secondary battery, and improving the cycling performance of the secondary battery. In addition, this can improve the transport efficiency of active ions in the electrode sheet, thereby further improving the cycling performance of the secondary battery.

Here, a C1-C4 alkyl group refers to a group formed by removing one hydrogen atom from a linear or branched alkane molecule having 1 to 4 carbon atoms, for example, including but not limited to methyl, ethyl, propyl, n-butyl, isobutyl, sec-butyl, tert-butyl, and the like.

A fluorinated C1-C4 alkyl group refers to a group formed by substituting at least one hydrogen atom in the above C1-C4 alkyl group with a fluorine atom, for example, including but not limited to fluoromethyl, fluoroethyl, fluoropropyl, and fluorobutyl.

In some embodiments, the first solvent is selected from one or more of methyl formate, ethyl formate, methyl acetate, ethyl acetate, propyl acetate, methyl propionate, ethyl propionate, and propyl propionate. Optionally, the first solvent includes ethyl formate, methyl acetate, ethyl acetate, and ethyl propionate.

In some embodiments, in the electrolyte, a mass content of the first solvent is 20% to 80%. Thus, this facilitates the electrolyte having a relatively high conductivity and low viscosity. For example, the mass content of the first solvent is 20%, 30%, 40%, 50%, 60%, 70%, 80%, or a value falling within a range defined by any two of these values. In some optional embodiments, in the electrolyte, the mass content of the first solvent is 30% to 70%.

In some embodiments, the electrolyte of the present disclosure further includes a second additive, and the second additive includes at least one of compounds represented by Formula IV and Formula V: 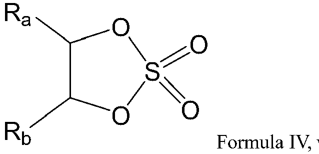 where
in Formula IV, Rₐ and R_{b} each independently represent H, 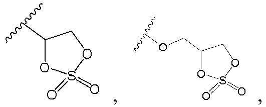 and 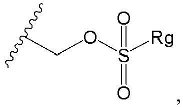 or Rₐ and R_{b} are connected to form 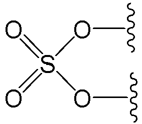 structure, and R_{g} represents fluorine, a fluorine-substituted or unsubstituted C1-C6 alkyl group, a C1-C6 alkoxy group, or 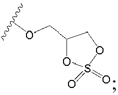 and 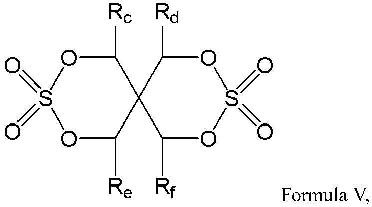 where
in Formula V, R_{c}, R_{d}, Rₑ, and R_{f} each independently represent H or a fluorine atom.

In the present disclosure, by adding the above second additive to the electrolyte, a dense SEI film can be formed at the negative electrode interface, providing a good passivation effect and improving the stability of the negative electrode interface, thereby inhibiting the reduction of the carboxylic acid ester solvent on the negative electrode, and further improving the cycling performance of the secondary battery.

In some optional embodiments, the second additive includes one or more of ethylene sulfate (DTD), bis(ethylene sulfate) (di-DTD), 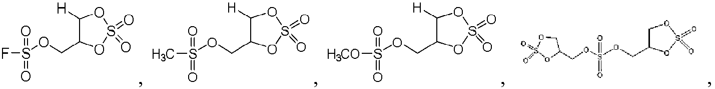 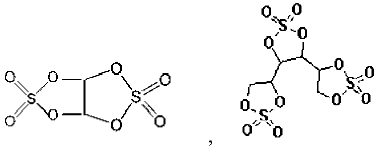 (D-mannitol trisulfate, tri-DTD), 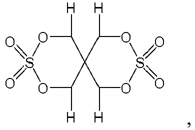 and

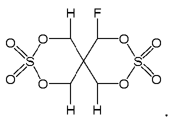

Here, C1-C6 alkyl group and C1-C6 alkoxy group have the same definitions as above.

The compound of Formula IV, for example, includes but is not limited to the following compounds: 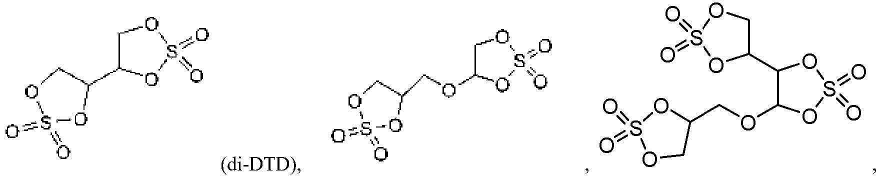 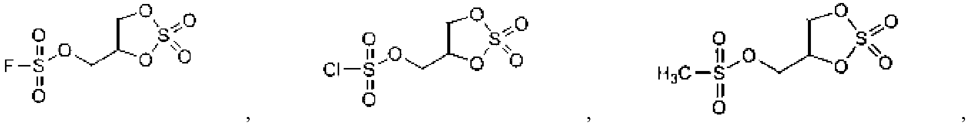 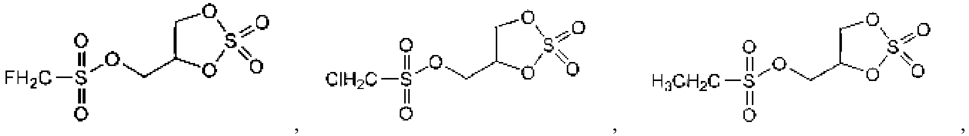 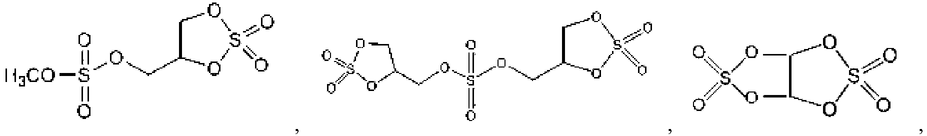 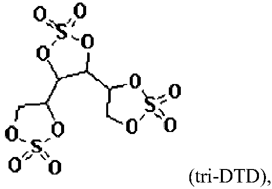 and the like.

The compound of Formula V, for example, includes: 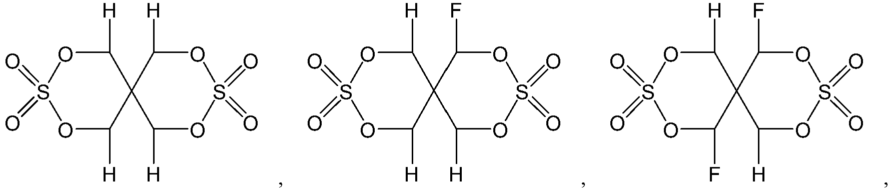 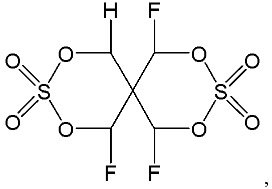 and the like.

In some embodiments, in the electrolyte, a mass ratio of the first solvent to the second additive is 2200:1 to 10:1. By making the mass ratio of the first solvent to the second additive within the above range, on the one hand, the electrolyte can have high conductivity, meeting the demand for high liquid-phase transport capability of lithium ions for high compaction density and thick electrode sheet, and at the same time, the second additive can form a dense protective film at the negative electrode interface, inhibit the side reaction of the first solvent passing through the interface, and maintain good stability of the negative electrode interface. For example, in the electrolyte, the mass ratio of the first solvent to the second additive may be 2200:1, 1000:1, 500:1, 200:1, 50:1, 10:1, or a value falling within a range defined by any two of these values.

In some embodiments, in the electrolyte, a mass content of the second additive is 0.01% to 2%. By making the mass content of the second additive within the above range, the second additive can form a dense SEI film on the negative electrode surface during formation, which has good passivation effect and can inhibit the side reaction of the first solvent passing through the interface film on the negative electrode, improving the cycling performance of the battery. For example, in the electrolyte, the mass content of the second additive may be 0.01%, 0.05%, 0.1%, 0.3%, 0.5%, 0.7%, 1.0%, 1.5%, 2.0%, or a value falling within a range defined by any two of these values. In some optional embodiments, the mass content of the second additive may be 0.1% to 2%.

In some embodiments, the electrolyte further includes a second solvent, and the second solvent includes at least one selected from ethylene carbonate, propylene carbonate, butylene carbonate, dimethyl carbonate, methyl ethyl carbonate, and diethyl carbonate. In some embodiments, in the electrolyte, a mass ratio of the first solvent to the second solvent is 1:3 to 9:1. The cyclic esters such as ethylene carbonate, propylene carbonate, and butylene carbonate have high dielectric constants and can dissociate lithium ions in the electrolyte, thereby facilitating more mobile lithium ions in the secondary battery, thus achieving high ionic conductivity; and the linear esters such as dimethyl carbonate, methyl ethyl carbonate, and diethyl carbonate can, on one hand, adjust the viscosity of the electrolyte, and on the other hand, adjust the low-temperature freezing point of the electrolyte, thereby facilitating the electrolyte having balanced performance. For example, the mass ratio of the first solvent to the second solvent may be 1:3, 2:3; 1:1, 2:1, 3:1, 4:1, 5:1, 6:1, 7:1, 8:1, 9:1, or a value falling within a range defined by any two of these values.

In some embodiments, the negative electrode sheet includes a negative electrode current collector and a negative electrode film layer located on at least one surface of the negative electrode current collector, a surface density of the negative electrode film layer is greater than or equal to 10.5 mg/cm², and/or the negative electrode film layer includes a graphite material, and a gram capacity of the graphite material is greater than or equal to 355 mAh/g. In the present disclosure, the term "surface density" refers to the mass of the negative electrode film layer per unit area. By making the surface density of the negative electrode film layer greater than or equal to 10.5 mg/cm² and making the gram capacity of the graphite material greater than or equal to 355 mAh/g, by increasing the surface density of the negative electrode film layer, the mass of the negative electrode film layer is increased, and at the same time, the gram capacity of the graphite material is improved, the combined effect of the two factors is conducive to improving the energy density of the secondary battery. For example, the surface density of the negative electrode film layer may be 10.5 mg/cm², 11 mg/cm², 11.5 mg/cm², 12 mg/cm², 12.5 mg/cm², 13 mg/cm², 13.5 mg/cm², 14 mg/cm², 14.5 mg/cm², 15 mg/cm², 15.5 mg/cm², 16 mg/cm², 16.5 mg/cm², 17 mg/cm², 17.5 mg/cm², 18 mg/cm², 18.5 mg/cm², or a value falling within a range defined by any two of these values. In some optional embodiments, the surface density of the negative electrode film layer is 12.0 mg/cm² to 18.5 mg/cm². For example, the gram capacity of the graphite material may be 355 mAh/g, 357 mAh/g, 359 mAh/g, 360 mAh/g, 361 mAh/g, 362 mAh/g, 363 mAh/g, 365 mAh/g, 370 mAh/g, or a value falling within a range defined by any two of these values. In some optional embodiments, the gram capacity of the graphite material is 362 mAh/g to 370 mAh/g.

In some embodiments, the negative electrode film layer may be provided on one side surface or two side surfaces of the negative electrode current collector. A thickness of the negative electrode film layer on one side of the negative electrode current collector is 70 µm to 125 µm. By making the thickness within the above range, it facilitates the negative electrode sheet having high capacity, so that the secondary battery has high energy density.

In some embodiments, a compaction density of the negative electrode sheet is 1.45 g/cm³ to 1.78 g/cm³. For example, the compaction density of the negative electrode sheet is 1.45 g/cm³, 1.5 g/cm³, 1.55 g/cm³, 1.60 g/cm³, 1.65 g/cm³, 1.70 g/cm³, 1.75 g/cm³, 1.78 g/cm³, or a value falling within a range defined by any two of these values. By making the compaction density within the above range, it is conducive to improving the energy density of the battery.

In some embodiments, a powder compaction density of the graphite material under 50000 N pressure is greater than or equal to 1.83 g/cc. By making the powder compaction density of the graphite material within the above range, it is conducive to improving the gram capacity of the negative electrode sheet, thereby improving the energy density of the secondary battery. For example, the powder compaction density of the graphite material under 50000 N pressure is 1.83 g/cc, 1.85 g/cc, 1.87 g/cc, 1.90 g/cc, 1.93 g/cc, 1.95 g/cc, 1.97 g/cc, 1.99 g/cc, 2.01 g/cc, 2.03 g/cc, 2.05 g/cc, or a value falling within a range defined by any two of these values. In some optional embodiments, the powder compaction density of the graphite material under 50000 N pressure is 1.93 g/cc to 2.05 g/cc.

In some embodiments, a specific surface area of the graphite material is 0.6 m²/g to 1.4 m²/g. By making the specific surface area of the graphite material within the above range, it is conducive to reducing the occurrence of surface side reactions, thereby reducing the consumption of active ions and further improving the cycling performance of the secondary battery. For example, the specific surface area of the graphite material is 0.6 m²/g, 0.8 m²/g, 1.0 m²/g, 1.2 m²/g, 1.4 m²/g, or a value falling within a range defined by any two of these values.

In some embodiments, a volume-based particle size Dᵥ50 of the graphite material is 12 µm to 22 µm. By making the volume-based particle size Dᵥ50 of the graphite material within the above range, it facilitates the negative electrode film layer having high compaction density, thereby facilitating the secondary battery having high energy density. For example, the volume-based particle size Dᵥ50 of the graphite material may be 12 µm, 14 µm, 16 µm, 18 µm, 20 µm, 22 µm, or a value falling within a range defined by any two of these values.

In the present disclosure, the graphite material can be prepared by the following method.

Step 1: A needle coke raw material (carbon content being greater than 93.0%, volatile component content being less than 6.5%, and sulfur element content being less than 1.0%) is crushed and shaped to obtain a shaped material with Dᵥ50 of 9 µm to 13 µm.

Step 2: The above shaped material is granulated together with a granulating agent through a granulating kettle to obtain a granulated material.

Step 3: The above granulated material is pre-carbonized under a nitrogen atmosphere at 1000°C to 1500°C to obtain an intermediate.

Step 4: The above intermediate is graphitized at a high temperature of 3000°C to 3200°C, and the graphitized particles are sieved and demagnetized to obtain artificial graphite.

In some embodiments, the softening point of the granulating agent is 180°C to 270°C. The softening point of the granulating agent refers to the temperature at which the granulating agent transitions from a solid state to a softened state with certain fluidity. In the present disclosure, the softening point can be tested using instruments and methods known in the art, for example, it can be measured with reference to GB/T4507-2014. When the softening point of the granulating agent is within the above range, the granulating agent has a high molecular weight and a high content of polycyclic aromatic hydrocarbons, which is conducive to improving the bonding property of the granulating agent, reducing the amount of the granulating agent in the granulation step, and reducing the residual carbon content of the granulating agent, thereby improving the gram capacity and compaction density of the artificial graphite. For example, the softening point of the above granulating agent may be 180°C, 200°C, 220°C, 240°C, 260°C, 270°C, or a value falling within a range defined by any two of these values.

In some embodiments, the coking value of the granulating agent is 50% to 70%. The coking value of the granulating agent refers to the percentage of the mass of the coke residue formed after heating, combustion, or other treatment of the granulating agent under specific experimental conditions to the mass of the original sample. In the present disclosure, the coking value can be tested using methods known in the art. For example, it can be measured with reference to GB/T 8727-2008. When the coking value of the granulating agent is within the above range, it is conducive to improving the gram capacity and compaction density of the artificial graphite, thereby improving the energy density of the secondary battery.

In some embodiments, a mass ratio of the shaped material to the granulating agent is 100:(6 to 12). When the proportion of the shaped material to the granulating agent is within the above range, it is conducive to reducing the residual carbon brought by the granulating agent and improving the gram capacity and compaction density of the artificial graphite, thereby improving the energy density of the secondary battery.

In some embodiments, the negative electrode current collector may be a metal foil or a composite current collector. For example, copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode sheet may be prepared in the following manner: the foregoing constituents used for preparing the negative electrode sheet, for example, the negative electrode active material, the conductive agent, the binder, and any other constituent, are dispersed in a solvent (for example, deionized water) to produce a negative electrode slurry; and the negative electrode slurry is applied onto the negative electrode current collector, followed by processes such as drying and cold pressing to obtain the negative electrode sheet.

In some embodiments, the electrolyte further includes an electrolytic salt.

In some embodiments, the electrolytic salt may be at least one selected from lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluoroxalate borate, lithium bisoxalatoborate, lithium difluorobisoxalate phosphate, and lithium tetrafluoro oxalate phosphate.

In the present disclosure, the surface density of the negative electrode film layer may be measured by the following method: the secondary battery is disassembled to obtain the negative electrode sheet, 15 pieces of each of the negative electrode sheet and the current collector (using the same production batch as the current collector for the negative electrode sheet) with a certain area S (in cm²) are punched, the mass is weighed, and an average value is calculated. An average mass of the negative electrode sheet is M1 (in mg), and an average mass of the current collector is M2 (in mg). When the active material layer is provided only on one side of the current collector, the surface density is: (M1-M2)/S, and when the active material layer is provided on two sides of the current collector, the surface density is: (M1-M2)/2S.

In the present disclosure, the thickness of the negative electrode film layer has the meaning known in the art and can be tested using methods known in the art. For example, the secondary battery is disassembled to obtain the negative electrode sheet, and the thickness of the negative electrode film layer is measured using a micrometer (for example, a Mitutoyo 293-100-type micrometer with accuracy of 0.1 µm). The thickness range given in the present disclosure is the thickness range of the negative electrode film layer on one side of the negative electrode current collector.

In the present disclosure, the compaction density of the negative electrode film layer has the meaning known in the art and can be tested using methods known in the art. For example, the battery is disassembled according to the above method to obtain the surface density and thickness of the negative electrode film layer, calculation is performed according to the following formula: compaction density of the negative electrode film layer=surface density of the negative electrode film layer/thickness of the negative electrode film layer.

In the present disclosure, the conductivity of the material has the meaning known in the art and can be tested using methods known in the art. For example, test method is as follows: A Mettler S700-K conductivity meter is used, and testing is performed based on the test standard specified in HG/T4067-2015.

In the present disclosure, the gram capacity of the material has the meaning known in the art and can be tested using methods known in the art. For example, test method is as follows: the sample powder is mixed with a conductive agent, a binder, and optional other additives at a certain mass ratio with a solvent to form a slurry; the prepared slurry is applied onto a surface of the copper foil of the negative electrode current collector, dried in an oven for later use; the electrolytic salt is dissolved in an organic solvent to prepare an electrolyte with a certain concentration; and then, a metal lithium sheet is used as the counter electrode, a polyethylene (PE) film is used as the separator, and the counter electrode and the separator are assembled with the electrolyte into a CR2430-type button cell in an argon-protected glove box. At 25°C, first, the above prepared button cell is discharged to 0.005 V at a constant current of 0.15 mA, and left standing for 5 minutes, then discharged to 0.005 V at a constant current of 10 µA, and the first cycle discharge capacity of the button cell is recorded. Then the button cell is charged to 2.0 V at a constant current of 0.3 mA, the first cycle charge capacity of the button cell is recorded, and a ratio of the charge capacity to the sample mass is the gram capacity of the material.

In the present disclosure, the powder compaction density of the material has the meaning known in the art and can be measured using instruments and methods known in the art. For example, it can be measured with reference to GB/T 24533-2009, using an electronic pressure testing machine (for example, a UTM7305-type electronic pressure testing machine). For example, test method is as follows: 1 g of sample powder is weighed, added to a mold with a bottom area of 1.327 cm², 50000 N of pressure is applied and held for 30s, then the pressure is released and held for 10 s, and then the powder compaction density of the material under 50000 N pressure is recorded and calculated.

In the present disclosure, the volume-based particle size Dᵥ50 of the material has the meaning known in the art, which represents a corresponding particle size when a cumulative volume distribution percentage of the material reaches 50%, and can be measured using instruments and methods known in the art. For example, it can be measured with reference to GB/T 19077-2016, using a laser particle size analyzer. The test instrument may be a laser particle size analyzer of Mastersizer 3000 from Malvern Instruments Ltd. of UK.

In the present disclosure, the specific surface area of the material has the meaning known in the art and can be measured using instruments and methods known in the art. For example, it can be measured with reference to GB/T 19587-2017, using the nitrogen adsorption specific surface area analysis test method, and calculated using the BET (Brunauer Emmett Teller) method. The test instrument may be a specific surface area and pore size analyzer of Tri-Star 3020 from Micromeritics of USA.

### Positive electrode sheet

In some embodiments, the positive electrode sheet includes a positive electrode current collector and a positive electrode film layer located on at least one surface of the positive electrode current collector, and the positive electrode film layer includes a positive electrode active material. The positive electrode active material is not particularly limited and may be a positive electrode active material well known in the art and used for secondary batteries. As an example, the positive electrode active material may include at least one of the following materials: olivine-structured lithium-containing phosphate, lithium transition metal oxide, and respective modified compounds thereof. However, the present disclosure is not limited to these materials, and may also use other conventional materials that can be used as positive electrode active materials for the battery. One type of these positive electrode active materials may be used alone, or two or more types may be used in combination.

In some embodiments, the positive electrode active material includes a lithium-containing phosphate.

In some embodiments, a chemical formula of the lithium-containing phosphate includes: LiₘAₐFeₓD_{d}P_{y}EₑO_{z}G_{g}, where A includes at least one element of Al, Na, K, or Mg; D includes at least one element of Cu, Mn, Cr, Zn, Pb, Ca, Co, Ni, Sr, Nb, Ti, or V; E includes at least one element of B, S, Si, or N; G includes at least one element of S, F, Cl, or Br; 0.5≤m≤1.15; 0≤a≤0.1; 0.5≤x≤1; 0≤d≤0.5; 0.5≤y≤1; 0≤e≤0.5; 3.5≤z≤4; and 0≤g≤0.5.

In some embodiments, the positive electrode active material includes lithium iron phosphate. When the positive electrode film layer includes lithium iron phosphate as the positive electrode active material, since the charge cutoff voltage of the lithium iron phosphate positive electrode material is relatively low, being less than or equal to 3.8 V, the electrochemical oxidation potential of the first additive is higher than 3.8 V, the first additive is stable on a surface of the lithium iron phosphate positive electrode and does not undergo side reactions, which is conducive to reducing capacity decay caused by side reactions at a positive electrode interface.

For example, the positive electrode current collector has two opposite surfaces in its thickness direction, and the positive electrode film layer is provided on either or both of the two opposite surfaces of the positive electrode current collector.

In some embodiments, the positive electrode current collector may be a metal foil or a composite current collector. For example, aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, or carbon nanofiber.

In some embodiments, the positive electrode sheet may be prepared in the following manner: the foregoing constituents used for preparing the positive electrode sheet, for example, the positive electrode active material, the conductive agent, the binder, and any other constituent, are dispersed in a solvent (for example, N-methylpyrrolidone) to produce a positive electrode slurry; and the positive electrode slurry is applied onto the positive electrode current collector, followed by processes such as drying and cold pressing to obtain the positive electrode sheet.

### Separator

In some embodiments, the secondary battery further includes a separator. The separator is not limited to a particular type in the present disclosure, and may be any well-known porous separator with good chemical stability and mechanical stability.

In some embodiments, material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

In some embodiments, the positive electrode sheet, negative electrode sheet, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

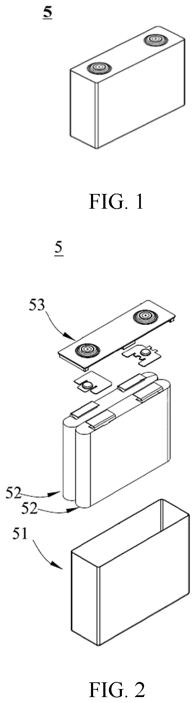

The secondary battery is not limited to a particular shape in the present disclosure, and may be cylindrical, rectangular, or of any other shapes. For example, FIG. 1 is a secondary battery 5 of a rectangular structure as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode sheet, the negative electrode sheet, and the separator may form an electrode assembly 52 through winding or lamination. The electrode assembly 52 is encapsulated in the accommodating cavity. The electrolyte infiltrates into the electrode assembly 52. There may be one or more electrode assemblies 52 in the secondary battery 5, and persons skilled in the art may make choices based on actual needs.

In some embodiments, the secondary battery may be assembled into a battery module, and the battery module may include one or more secondary batteries. The specific quantity may be chosen by persons skilled in the art according to use and capacity of the battery module.

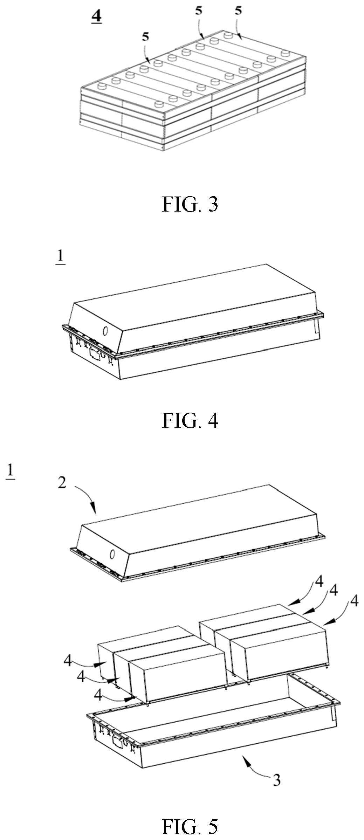

FIG. 3 is a battery module 4 as an example. Referring to FIG. 3, in the battery module 4, a plurality of secondary batteries 5 may be sequentially arranged along a length direction of the battery module 4. Certainly, the secondary batteries may alternatively be arranged in any other manners. Further, the plurality of secondary batteries 5 may be fixed using fasteners.

Optionally, the battery module 4 may further include a shell with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

FIG. 4 and FIG. 5 are a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery module 4. The plurality of battery modules 4 may be arranged in the battery box in any manner.

In addition, the present disclosure also provides an electric apparatus. The electric apparatus includes at least one of the secondary battery, battery module, or battery pack provided by the present disclosure. The secondary battery, battery module, or battery pack may be used as a power source of the electric apparatus or as an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, battery module, or battery pack may be selected for the electric apparatus depending on requirements for using the electric apparatus.

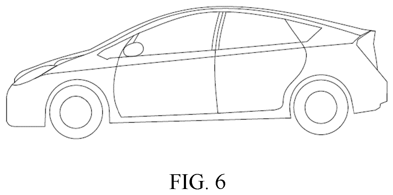

FIG. 6 is an electric apparatus as an example. The electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of the present disclosure. The examples described below are illustrative and merely used for explaining the present disclosure, and cannot be construed as limitations on the present disclosure. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Preparation of electrolyte

### Electrolyte 1-1

In an argon atmosphere glove box with a water content less than 10 ppm, first, the second solvent ethylene carbonate (EC) and the first solvent ethyl acetate (EA) were mixed according to the contents shown in Table 1 to prepare an organic solvent mixture, then fully dried lithium salt LiPF₆ was dissolved in the above organic solvent mixture, then the first additive vinylene carbonate and the second additive bis(ethylene sulfate) (di-DTD) were added, and the mixture was mixed uniformly to obtain the electrolyte shown in Table 1. A concentration of the lithium salt was 1 mol/L.

The above prepared electrolyte was subjected to conductivity testing, and the measured conductivity was 15.0 mS/cm.

### Conductivity testing

The conductivity of the electrolyte was tested using a Mettler S700-K conductivity meter based on the test standard specified in HG/T4067-2015, with a test error of ±0.4 mS/cm.

### Electrolytes 1-2 to 1-23

The preparation methods of electrolytes 1-2 to 1-23 were similar to the preparation method of electrolyte 1-1, except that the types and contents of the first additive, second additive, first solvent, and second solvent were adjusted according to Table 1.

### Electrolyte 1-1'

The preparation method of electrolyte 1-1' was similar to the preparation method of electrolyte 1-1, except that the solvents were adjusted so that the conductivity of the electrolyte was less than 14 mS/cm.

### Electrolyte 1-2'

The preparation method of electrolyte 1-1' was similar to the preparation method of electrolyte 1-1, except that the first additive was not added, and the amounts of the second additive, first solvent and second solvent were adjusted.

**Table 1 Formulations of electrolyte**

| Number of electrolyte | First additive | | Second additive | | First solvent | | Second solvent | | Conductivity (mS/cm) |
|---|---|---|---|---|---|---|---|---|---|
| | Type | Content in electrolyte (wt%) | Type | Content in electrolyte (wt%) | Type | Content in electrolyte (wt%) | Type | Content in electrolyte (wt%) | |
| 1-1 | Formula I | 2% | di-DTD | 0.5% | Ethyl acetate | 59.5% | Ethylene carbonate | 25.5% | 15.0 |
| | R₁=H | | | | | | | | |
| 1-2 | Formula I | 2% | di-DTD | 0.5% | Methyl acetate | 59.5% | Ethylene carbonate | 25.5% | 20.8 |
| | R₁=fluoro | | | | | | | | |
| 1-3 | Formula I | 2% | di-DTD | 0.5% | Methyl acetate | 68.0% | Ethylene carbonate | 17.0% | 21.9 |
| | R₁=ethyl | | | | | | | | |
| 1-4 | Formula I | 2% | di-DTD | 0.5% | Ethyl acetate | 59.5% | Ethylene carbonate | 25.5% | 15.1 |
| | R₁=propenyl | | | | | | | | |
| 1-5 | Formula I | 2% | di-DTD | 0.5% | Ethyl acetate | 59.5% | Ethylene carbonate | 25.5% | 14.9 |
| | R₁=1-fluoropropyl | | | | | | | | |
| 1-6 | Formula I | 2% | di-DTD | 0.5% | Ethyl acetate | 59.5% | Ethylene carbonate | 25.5% | 14.7 |
| | R₁=1-fluoroethenyl | | | | | | | | |
| 1-7 | Formula II | 2% | di-DTD | 0.5% | Ethyl acetate | 59.5% | Ethylene carbonate | 25.5% | 15.0 |
| | R₂, R₃ and R₄=H | | | | | | | | |
| | R₅=F | | | | | | | | |
| 1-8 | Formula II | 2% | di-DTD | 0.5% | Ethyl acetate | 59.5% | Ethylene carbonate | 25.5% | 14.9 |
| | R₂, R₃ and R₄=H | | | | | | | | |
| | R₅=CH3 | | | | | | | | |
| 1-9 | Formula II | 2% | di-DTD | 0.5% | Ethyl acetate | 59.5% | Ethylene carbonate | 25.5% | 14.7 |
| | R₂, R₃ and R₄=H | | | | | | | | |
| | R₅=OCH3 | | | | | | | | |
| 1-10 | Formula II | 2% | di-DTD | 0.5% | Ethyl acetate | 59.5% | Ethylene carbonate | 25.5% | 14.6 |
| | R₂, R₃ and R₄=H | | | | | | | | |
| | R₅=vinyl | | | | | | | | |
| 1-11 | Formula II | 2% | di-DTD | 0.5% | Methyl acetate | 59.5% | Ethylene carbonate | 25.5% | 20.5 |
| | R₂=R₄=H | | | | | | | | |
| | R₃=hexyl | | | | | | | | |
| | R₅=ethynyl | | | | | | | | |
| 1-12 | Formula I | 2% | 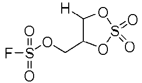 | 0.5% | Ethyl formate | 59.5% | Ethylene carbonate | 25.5% | 20.3 |
| | R₁=H | | | | | | | | |
| 1-13 | Formula I | 2% | 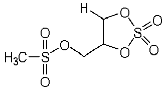 | 0.5% | Ethyl acetate | 59.5% | Ethylene carbonate | 25.5% | 15.2 |
| | R₁=H | | | | | | | | |
| 1-14 | Formula I | 2% | 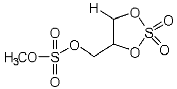 | 0.5% | Ethyl acetate | 59.5% | Ethylene carbonate | 25.5% | 14.6 |
| | R₁=dodecyl | | | | | | | | |
| 1-15 | Formula II | 2% | 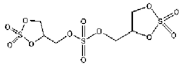 | 0.5% | Ethyl acetate | 59.5% | Ethylene carbonate | 25.5% | 14.7 |
| | R₂=H | | | | | | | | |
| | R₃=fluoro | | | | | | | | |
| | R₄=hexyloxy | | | | | | | | |
| | R₅=methyl | | | | | | | | |
| 1-16 | Formula II | 2% | 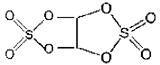 | 0.5% | Ethyl acetate | 59.5% | Ethylene carbonate | 25.5% | 14.6 |
| | R₂=R₄=H | | | | | | | | |
| | R₃=hexenyl | | | | | | | | |
| | R₅=propoxy | | | | | | | | |
| 1-17 | Formula I | 2% | 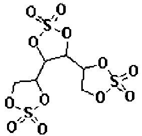 | 0.5% | Ethyl acetate | 59.5% | Ethylene carbonate | 25.5% | 15.2 |
| | R₁=H | | | | | | | | |
| 1-18 | Formula I | 2% | 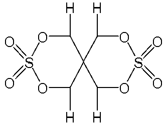 | 0.5% | Ethyl acetate | 59.5% | Ethylene carbonate | 25.5% | 15.3 |
| | R₁=H | | | | | | | | |
| 1-19 | Formula I | 2% | 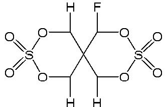 | 0.5% | Ethyl acetate | 59.5% | Ethylene carbonate | 25.5% | 15.5 |
| | R₁=H | | | | | | | | |
| 1-20 | Formula I | 0.01% | di-DTD | 0.5% | Ethyl acetate | 60.9% | Ethylene carbonate | 26.1% | 15.4 |
| | R₁=H | | | | | | | | |
| 1-21 | Formula I | 5% | di-DTD | 0.5% | Ethyl acetate | 57.4% | Ethylene carbonate | 24.6% | 15.6 |
| | R₁=H | | | | | | | | |
| 1-22 | Formula I | 2% | di-DTD | 0.01% | Methyl acetate | 21.4% | Ethylene carbonate + dimethyl carbonate (at a mass ratio of 1:2) | 64.1% | 14.6 |
| | R₁=H | | | | | | | | |
| 1-23 | Formula I | 2% | di-DTD | 2% | Methyl acetate | 66.8% | Ethylene carbonate | 16.7% | 22.0 |
| | R₁=H | | | | | | | | |
| 1-1' | Formula I | 2% | di-DTD | 0.5% | Ethyl acetate | 8.5% | Ethylene carbonate + dimethyl carbonate (at a mass ratio of 1:2) | 76.5% | 13.0 |
| | R₁=H | | | | | | | | |
| 1-2' | / | / | di-DTD | 2% | Ethyl acetate | 59.9% | Ethylene carbonate | 25.7% | 15.0 |

### Preparation of negative electrode sheet

### Negative electrode sheet 2-1

### (1) Preparation of graphite

Step 1: A calcined needle coke raw material (carbon content being 98.5%, volatile component content being 1.0%, and sulfur element content being 0.5%) was crushed and shaped by mechanical milling to obtain a shaped material with Dᵥ50 of 11 µm;
Step 2: The above shaped material was granulated together with granulation pitch (softening point being 200°C and coking value being 60%) as a granulating agent through a granulating kettle to obtain a granulated material, where the mass ratio of the shaped material to the granulating agent was 100:8.
Step 3: The above granulated material was pre-carbonized under a nitrogen atmosphere at 1150°C for 2 h to obtain an intermediate.
Step 4: The above intermediate was graphitized at a high temperature of 3200°C, and the graphitized particles were sieved and demagnetized to obtain artificial graphite.

### (2) Preparation of negative electrode sheet

The above artificial graphite, a conductive agent Super P, a thickener sodium carboxymethyl cellulose, and a binder styrene-butadiene rubber were fully stirred and mixed in deionized water at a weight ratio of 96.6: 0.80:1.0:1.6 to form a negative electrode slurry. By extrusion coating, the negative electrode slurry was applied onto two sides of the negative electrode current collector copper foil, followed by drying and cold pressing, negative electrode film layers were formed on two sides of the negative electrode current collector, and a thickness of the single-layer negative electrode film layer was 90 µm, thereby obtaining the negative electrode sheet.

### Negative electrode sheets 2-2 to 2-4

The conditions in the preparation steps of graphite were adjusted according to the values in Table 2 below, and other conditions were the same as above, to obtain negative electrode sheets 2-2 to 2-4.

### Test of gram capacity of graphite:

The above prepared material, the conductive agent carbon black (Super P), and a binder polyvinylidene fluoride (PVDF) were mixed uniformly with solvent N-methylpyrrolidone (NMP) at a mass ratio of 91.6:1.8:6.6 to form a slurry; the prepared slurry was applied onto the surface of the copper foil of the negative electrode current collector, dried in an oven for later use; ethylene carbonate (EC), methyl ethyl carbonate (EMC), and diethyl carbonate (DEC) were mixed at a volume ratio of 1:1:1 to obtain an organic solvent, then LiPF₆ was dissolved in the above organic solvent to prepare an electrolyte with a concentration of 1 mol/L; then, a metal lithium sheet was used as the counter electrode, a polyethylene (PE) film was used as the separator, and the counter electrode and the separator were assembled with the above electrolyte into a CR2430-type button cell in an argon-protected glove box; and the obtained button cell was left standing for 12 h.

At 25°C, first, the above prepared button cell was discharged to 0.005 V at a constant current of 0.15 mA, and left standing for 5 minutes, then discharged to 0.005 V at a constant current of 10 µA, and the first cycle discharge capacity of the button cell was recorded. Then button cell was charged to 2.0 V at a constant current of 0.3 mA, the first cycle charge capacity of the button cell was recorded, and a ratio of the charge capacity to the sample mass was the gram capacity of the material.

### Test of powder compaction density

It was measured with reference to GB/T 24533-2009, using an electronic pressure testing machine (UTM7305-type electronic pressure testing machine). Specifically: 1 g of sample powder was weighed, added to a mold with a bottom area of 1.327 cm², 50000 N of pressure was applied and held for 30s, then the pressure was released and held for 10s, and then the powder compaction density of the material under 50000 N pressure was recorded and calculated.

### Test of surface density and thickness of prepared negative electrode film layer

The negative electrode sheet prepared after cold pressing was tested using the following method: 15 pieces of each of the negative electrode sheet and the current collector (using the same production batch as the current collector for the negative electrode sheet) with a certain area S (in cm²) were punched, the mass was weighed, and an average value was calculated. An average mass of the negative electrode sheet was M1 (in mg), and an average mass of the current collector was M2 (in mg). When the active material layer was provided on two sides of the current collector, the surface density was: (M1-M2)/2S.

The negative electrode sheet prepared after cold pressing was wiped to remove the negative electrode active material on one side, after which the thickness H1 of the negative electrode sheet was measured using a Mitutoyo 293-100-type micrometer with an accuracy of 0.1 µm, then the negative electrode active material was completely wiped off, and the thickness H2 of the negative electrode current collector was measured. The single-layer thickness of the negative electrode film layer was (H1-H2).

**Table 2**

| Number of negative electrode sheet | Raw material | | | | Graphitization temperature (°C) | Graphite | | Negative electrode film layer after cold pressing | |
|---|---|---|---|---|---|---|---|---|---|
| | Material type | Carbon content | Volatile component content | Sulfur element content | | Gram capacity (mAh/g) | Powder compaction density (g/cc) | Surface density (mg/cm²) | Single-layer thickness (µm) |
| 2-1 | Calcined needle coke | 98.5% | 1% | 0.5% | 3200 | 370 | 2.01 | 12.0 | 70 |
| 2-2 | Raw needle coke | 93.0% | 6.5% | 0.5% | 3100 | 355 | 1.88 | 12.0 | 70 |
| 2-3 | Calcined needle coke | 99.0% | 0.5% | 0.5% | 3150 | 362 | 1.98 | 18.5 | 94.5 |
| 2-4 | Calcined needle coke | 99.0% | 0.5% | 0.5% | 3150 | 362 | 1.98 | 10.5 | 63.6 |

### Example 1

### 1. Preparation of positive electrode sheet

Lithium iron phosphate, a conductive agent carbon black (Super P), and a binder polyvinylidene fluoride were mixed at a weight ratio of 96:2:2, an appropriate amount of solvent NMP was added, stirred uniformly to obtain a positive electrode slurry. The positive electrode slurry was applied onto two surfaces of the positive electrode current collector aluminum foil, followed by drying and cold pressing, to obtain the positive electrode sheet.

### 2. Separator

A polyethylene film was used as the separator, treated with a double-sided 1.5 mg adhesive layer (PVDF being used as the binder) and treated with a single-sided 1 µm heat-resistant layer (common heat-resistant layer formulation in the art, with alumina as the heat-resistant particles).

### 3. Preparation of battery

The above prepared positive electrode sheet and negative electrode sheet were sequentially placed so that the separator was located between the positive electrode sheet and negative electrode sheet for separation, and then the resulting stack was wound to obtain an electrode assembly. The electrode assembly was placed into an outer package and dried, and then the electrolyte was injected, followed by processes such as vacuum packaging, standing, formation, and shaping, to obtain a secondary battery.

The above prepared secondary battery was subjected to performance tests according to the following methods. The test results are shown in Table 3 below.

### (1) Test of energy density of secondary battery

At 25°C, the secondary battery was charged to 3.65 V at a constant current of 1/3C, then charged at a constant voltage of 3.65 V until the current was 0.05C, left standing for 5 min, and then discharged to 2.5 V at a constant current of 1/3C, and the discharge energy of the battery at this time was recorded. The battery discharge energy divided by the weight of the battery was the weight energy density of the battery, measured in Wh/kg.

### (2) Test of cycling performance of secondary battery

At 45°C, the secondary battery was charged to a voltage of 3.65 V at a constant current of 1/3C, then charged at a constant voltage of 3.65 V until the current was 0.05C, and left standing for 5 min. Then the battery was discharged to a voltage of 2.0 V at a constant current of 1/3C. This was one charge-discharge cycle process, and the discharge capacity this time was the discharge capacity C1 of the first cycle. The charge-discharge cycling test was performed according to the above method, and cycling was not ended until the discharge capacity decayed to 80% of the initial value C1. The number of cycles when the capacity decayed to 80% was recorded as "80% SOH cycle number".

The larger the 80% SOH cycle number, the better the cycling performance of the cell and the longer the cycle life.

### (3) Test method of thickness and surface density of negative electrode film layer in secondary battery:

The above tested secondary battery was disassembled after fully discharging to obtain the negative electrode sheet, and the surface density and thickness of the negative electrode film layer were tested according to the following method. The test results are shown in Table 3.

The secondary battery was disassembled to obtain the negative electrode sheet, and the thickness H1 of the negative electrode sheet was measured using a Mitutoyo 293-100-type micrometer with an accuracy of 0.1 µm. The negative electrode film layer on the negative electrode sheet was removed to obtain the negative electrode current collector, and the thickness H2 of the negative electrode current collector was measured using a micrometer. The single-layer thickness of the negative electrode film layer was (H1-H2).

The secondary battery was disassembled to obtain the negative electrode sheet, 15 pieces of each of the negative electrode sheet and the current collector (using the same production batch as the current collector for the negative electrode sheet) with a certain area S (in cm²) were punched, the mass was weighed, and the average value was calculated. The average mass of the negative electrode sheet was M1 (in mg), and the average mass of the current collector was M2 (in mg). When the active material layer was provided only on one side of the current collector, the surface density was: (M1-M2)/S, and when the active material layer was provided on two sides of the current collector, the surface density was: (M1-M2)/2S.

### Examples 2 to 26

The preparation methods of Examples 2 to 26 were similar to that of Example 1, except that the type of the electrolyte was adjusted with reference to the parameters in Table 3.

### Comparative Example 1

The preparation method of Comparative Example 1 was similar to that of Example 1, except that negative electrode sheet 2-2 and electrolyte 1-1' were used.

### Comparative Example 2

The preparation method of Comparative Example 2 was similar to that of Example 1, except that negative electrode sheet 2-2 and electrolyte 1-2' were used.

**Table 3**

| Number of example | Secondary battery | | | | Negative electrode film layer in secondary batterv | |
|---|---|---|---|---|---|---|
| | Negative electrode sheet | Electrolyte | Energy density (Wh/kg) | Number of cycles to 80% SOH at 45°C | Surface density (mg/cm²) | Single-layer thickness (µm) |
| Example 1 | 2-1 | 1-1 | 198.3 | 2325 | 12.0 | 77 |
| Example 2 | 2-1 | 1-2 | 198.6 | 2276 | 12.0 | 77 |
| Example 3 | 2-1 | 1-3 | 198.1 | 2169 | 12.0 | 77 |
| Example 4 | 2-1 | 1-4 | 198.2 | 2223 | 12.0 | 77 |
| Example 5 | 2-1 | 1-5 | 198.5 | 2239 | 12.0 | 77 |
| Example 6 | 2-1 | 1-6 | 198.4 | 2186 | 12.0 | 77 |
| Example 7 | 2-1 | 1-7 | 198.7 | 2187 | 12.0 | 77 |
| Example 8 | 2-1 | 1-8 | 198.2 | 2156 | 12.0 | 77 |
| Example 9 | 2-1 | 1-9 | 198.8 | 2153 | 12.0 | 77 |
| Example 10 | 2-1 | 1-10 | 198.5 | 2187 | 12.0 | 77 |
| Example 11 | 2-1 | 1-11 | 198.4 | 2089 | 12.0 | 77 |
| Example 12 | 2-1 | 1-12 | 198.2 | 2082 | 12.0 | 77 |
| Example 13 | 2-1 | 1-13 | 198.3 | 2084 | 12.0 | 77 |
| Example 14 | 2-1 | 1-14 | 198.0 | 2156 | 12.0 | 77 |
| Example 15 | 2-1 | 1-15 | 198.2 | 2178 | 12.0 | 77 |
| Example 16 | 2-1 | 1-16 | 198.1 | 2106 | 12.0 | 77 |
| Example 17 | 2-1 | 1-17 | 198.6 | 2320 | 12.0 | 77 |
| Example 18 | 2-1 | 1-18 | 198.3 | 2288 | 12.0 | 77 |
| Example 19 | 2-1 | 1-19 | 198.8 | 2172 | 12.0 | 77 |
| Example 20 | 2-1 | 1-20 | 198.2 | 2076 | 12.0 | 77 |
| Example 21 | 2-1 | 1-21 | 198.1 | 2408 | 12.0 | 77 |
| Example 22 | 2-1 | 1-22 | 198.7 | 2317 | 12.0 | 77 |
| Example 23 | 2-1 | 1-23 | 198.5 | 2132 | 12.0 | 77 |
| Example 24 | 2-2 | 1-1 | 185.6 | 2453 | 12.0 | 77 |
| Example 25 | 2-3 | 1-1 | 195.8 | 2253 | 18.5 | 104.1 |
| Example 26 | 2-4 | 1-1 | 193.3 | 2432 | 10.5 | 70 |
| Comparative Example 1 | 2-2 | 1-1' | 185.4 | 1128 | 12.0 | 77 |
| Comparative Example 2 | 2-2 | 1-2' | 185.2 | 1256 | 12.0 | 77 |

From the above results, it can be seen that in Examples 1 to 26, by making the conductivity of the electrolyte 14 mS/cm to 22 mS/cm and including the first additive, excellent cycling performance can be obtained while achieving high energy density. In contrast, in Comparative Examples 1 and 2, the cycling performance is severely deteriorated, making it impossible to achieve both high energy density and high cycling performance at the same time.

It should be noted that the present disclosure is not limited to the foregoing embodiments. The foregoing embodiments are merely examples, and embodiments having substantially the same constructions and the same effects as the technical idea within the scope of the technical solutions of the present disclosure are all included in the technical scope of the present disclosure. In addition, without departing from the essence of the present disclosure, various modifications made to the embodiments that can be conceived by persons skilled in the art, and other forms constructed by combining some of the constituent elements in the embodiments are also included in the scope of the present disclosure.

## Claims

1. A secondary battery, comprising a positive electrode sheet, a negative electrode sheet, a separator, and an electrolyte, wherein
a conductivity of the electrolyte is 14 mS/cm to 22 mS/cm, and
the electrolyte comprises a first additive, and the first additive comprises at least one of compounds represented by Formula I and Formula II: 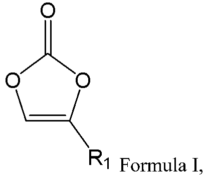 wherein
in Formula I, R₁ is selected from H, a fluorine atom, a fluorine-substituted or unsubstituted C1-C12 alkyl group, and a fluorine-substituted or unsubstituted C2-C10 alkenyl group; and 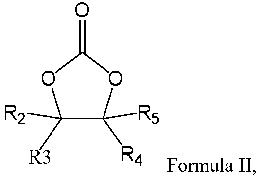 wherein
in Formula II, R₂, R₃, R₄ and R₅ are each independently selected from a hydrogen atom, a fluorine atom, a fluorine-substituted or unsubstituted C 1-C6 alkyl group, a fluorine-substituted or unsubstituted C1-C6 alkoxy group, a C2-C6 alkenyl group, or a C2-C6 alkynyl group, and R₂, R₃, R₄ and R₅ are not all hydrogen atoms.

2. The secondary battery according to claim 1, wherein the conductivity of the electrolyte is 14 mS/cm to 19 mS/cm.

3. The secondary battery according to claim 1 or 2, wherein in Formula I, R₁ is selected from a hydrogen atom, a fluorine atom, a fluorine-substituted or unsubstituted C1-C6 alkyl group, and a fluorine-substituted or unsubstituted C2-C6 alkenyl group; and/or
in Formula II, R₂, R₃, R₄, and R₅ are each independently selected from a hydrogen atom, a fluorine atom, a fluorine-substituted or unsubstituted C1-C4 alkyl group, a fluorine-substituted or unsubstituted C1-C4 alkoxy group, a C2-C4 alkenyl group, or a C2-C4 alkynyl group, and R₂, R₃, R₄ and R₅ are not all hydrogen atoms.

4. The secondary battery according to any one of claims 1 to 3, wherein the first additive comprises at least one of fluoroethylene carbonate and vinylene carbonate.

5. The secondary battery according to any one of claims 1 to 4, wherein the electrolyte comprises a first solvent, and the first solvent comprises a compound represented by Formula III: 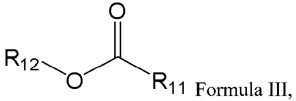 wherein
in Formula III, R₁₁ is selected from a hydrogen atom and a fluorine-substituted or unsubstituted C1-C4 alkyl group, and R₁₂ is selected from a fluorine-substituted or unsubstituted C1-C4 alkyl group.

6. The secondary battery according to claim 5, wherein the first solvent is selected from one or more of methyl formate, ethyl formate, methyl acetate, ethyl acetate, propyl acetate, methyl propionate, ethyl propionate, and propyl propionate.

7. The secondary battery according to claim 6, wherein the first solvent is selected from one or more of ethyl formate, methyl acetate, and ethyl acetate.

8. The secondary battery according to any one of claims 5 to 7, wherein the electrolyte further comprises a second additive, and the second additive comprises at least one of compounds represented by Formula IV and Formula V: 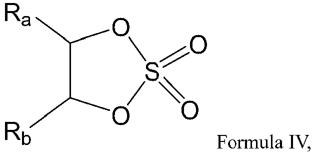 wherein
in Formula IV, Rₐ and R_{b} each independently represent H, 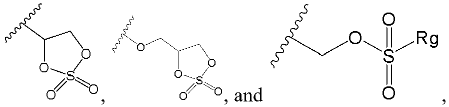 or Rₐ and R_{b} are connected to form 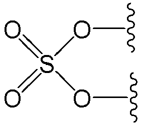 structure, and R_{g} represents a fluorine atom, a fluorine-substituted or unsubstituted C1-C6 alkyl group, a C1-C6 alkoxy group, or 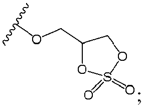 and 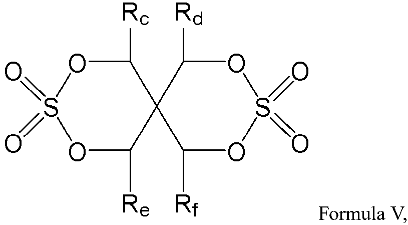 wherein
in Formula V, R_{c}, R_{d}, Rₑ, and R_{f} each independently represent H or a fluorine atom.

9. The secondary battery according to claim 8, wherein the second additive comprises one or more of ethylene sulfate, bis(ethylene sulfate),

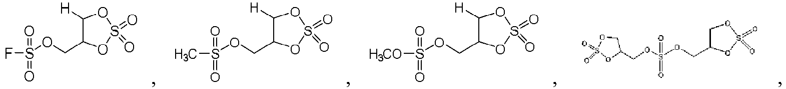

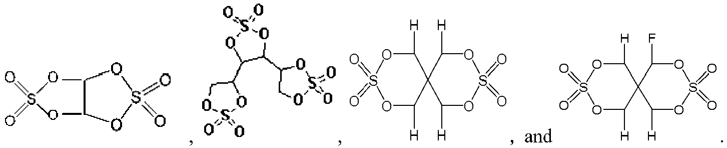

10. The secondary battery according to any one of claims 1 to 9, wherein in the electrolyte, a mass content of the first additive is 0.01% to 5%.

11. The secondary battery according to any one of claims 5 to 10, wherein in the electrolyte, a mass content of the first solvent is 20% to 80%.

12. The secondary battery according to any one of claims 8 to 11, wherein in the electrolyte, a mass content of the second additive is 0.01% to 2%.

13. The secondary battery according to any one of claims 8 to 12, wherein in the electrolyte, a mass ratio of the first solvent to the second additive is 2200:1 to 10:1.

14. The secondary battery according to any one of claims 5 to 13, wherein the electrolyte further comprises a second solvent, and the second solvent comprises at least one selected from ethylene carbonate, propylene carbonate, butylene carbonate, dimethyl carbonate, methyl ethyl carbonate, and diethyl carbonate.

15. The secondary battery according to claim 14, wherein in the electrolyte, a mass ratio of the first solvent to the second solvent is 1:3 to 9:1.

16. The secondary battery according to any one of claims 1 to 15, wherein the negative electrode sheet comprises a negative electrode current collector and a negative electrode film layer located on at least one surface of the negative electrode current collector, and a surface density of the negative electrode film layer is greater than or equal to 10.5 mg/cm²; and/or
the negative electrode film layer comprises a graphite material, and a gram capacity of the graphite material is greater than or equal to 355 mAh/g.

17. The secondary battery according to any one of claims 1 to 16, wherein the surface density of the negative electrode film layer is 12.0 mg/cm² to 18.5 mg/cm², and/or,
the gram capacity of the graphite material is 362 mAh/g to 370 mAh/g.

18. The secondary battery according to any one of claims 1 to 17, wherein a thickness of the negative electrode film layer on one side of the negative electrode current collector is 70 µm to 125 µm.

19. The secondary battery according to any one of claims 1 to 18, wherein a compaction density of the negative electrode sheet is 1.45 g/cm³ to 1.78 g/cm³.

20. The secondary battery according to any one of claims 1 to 19, wherein a powder compaction density of the graphite material under 50000 N pressure is greater than or equal to 1.83 g/cc.

21. The secondary battery according to any one of claims 1 to 20, wherein the powder compaction density of the graphite material under 50000 N pressure is 1.93 g/cc to 2.05 g/cc.

22. The secondary battery according to any one of claims 1 to 21, wherein a specific surface area of the graphite material is 0.6 m²/g to 1.4 m²/g.

23. The secondary battery according to any one of claims 1 to 22, wherein a volume-based particle size Dᵥ50 of the graphite material is 12 µm to 22 µm.

24. The secondary battery according to any one of claims 1 to 23, wherein the positive electrode sheet comprises a positive electrode current collector and a positive electrode film layer located on at least one surface of the positive electrode current collector, and the positive electrode film layer comprises a lithium-containing phosphate.

25. The secondary battery according to claim 24, wherein a chemical formula of the lithium-containing phosphate comprises: LiₘAₐFeₓD_{d}P_{y}EₑO_{z}G_{g}, wherein A comprises at least one element of Al, Na, K, or Mg; D comprises at least one element of Cu, Mn, Cr, Zn, Pb, Ca, Co, Ni, Sr, Nb, Ti, or V; E comprises at least one element of B, S, Si, or N; G comprises at least one element of S, F, Cl, or Br; 0.5≤m≤1.15; 0≤a≤0.1; 0.5≤x≤1; 0≤d≤0.5; 0.5≤y≤1; 0≤e≤0.5; 3.5≤z≤4; and 0≤g≤0.5.

26. An electric apparatus, comprising the secondary battery according to any one of claims 1 to 25.
